(19) Europäisches Patentamt
European Patent Office
Office européen des brevets

(11) EP 0 900 834 A1

# (12) EUROPEAN PATENT APPLICATION

(43) Date of publication:
**10.03.1999 Bulletin 1999/10**

(51) Int. Cl.$^6$: **C09K 3/10**, C08L 39/00, C08L 75/04, C08L 101/14

(21) Application number: **98102540.6**

(22) Date of filing: **13.02.1998**

(84) Designated Contracting States:
**AT BE CH DE DK ES FI FR GB GR IE IT LI LU MC NL PT SE**
Designated Extension States:
**AL LT LV MK RO SI**

(30) Priority: **05.09.1997 JP 240556/97**

(71) Applicant:
**SHOWA DENKO KABUSHIKI KAISHA**
**Minato-ku, Tokyo (JP)**

(72) Inventors:
- **Tagoshi, Hirotaka**
**Tokyo (JP)**
- **Yamaguchi, Tetsuhiko**
**Kawasaki-shi, Kanagawa (JP)**

(74) Representative:
**Strehl Schübel-Hopf & Partner**
**Maximilianstrasse 54**
**80538 München (DE)**

## (54) Water-swellable elastomer composition

(57) A water-swellable elastomer composition comprising (A) an N-vinylcarboxylic acid amide-base crosslinked resin, (B) a water-swellable urethane obtained by the reaction of a hydrophilic polyol with a polyisocyanate, and (C) an elastomer can retain the stable magnification of swelling with an aqueous solution containing an electrolyte or ion such as acid, alkali and various salts, sea water or cement water, and can be used as a leak-preventive material for a long period of time without undergoing reduction in the water stopping capability.

EP 0 900 834 A1

## Description

### FIELD OF THE INVENTION

The present invention relates to a water-swellable elastomer composition which can retain the stable magnification of swelling with an aqueous solution containing an electrolyte or ion such as acid, alkali and various salts, sea water or cement water, and can be used as a leak-preventive material for a long period of time.

### BACKGROUND OF THE INVENTION

The rubber composition is elastic and has water stopping property, therefore, it is being widely used as a packing material against liquid or gas. In particular, the packing material as a water stopping material of a structure such as tunnel is necessarily used for a long period of time and can be difficultly exchanged even on the occurrence of leakage. Accordingly, a water-swellable elastomer composition having blended therein, for example, a water-absorbing resin is sometimes used because of its capability of preventing shrinkage of the rubber as a packing material and preventing cracking. The water-swellable elastomer composition commonly used comprises a synthetic rubber such as styrene-butadiene rubber, chloroprene rubber or ethylene-propylene rubber or a natural rubber, having blended therein a water absorptive resin comprising an acrylate- or sulfonate-base monomer.

However, this water-swellable elastomer composition is extremely lowered in the swelling capability with an aqueous solution containing an electrolyte or ion such as acid, alkali and various salts, sea water or cement water, though it exhibits sufficiently high swelling capability with pure water free of an electrolyte or ion.

Accordingly, this water-swellable elastomer composition is insufficient in respect of the swelling capability as a packing material for preventing leakage of an aqueous solution containing various electrolytes or ions as in the case of leakage on the excavation of a submarine tunnel, a large diameter sewer or hot spring. When such a water-swellable elastomer composition is used, it is difficult to stably retain the water stopping effect for a long period of time, because, for example, in the case of excavation of a long tunnel, the water quality may differ among the working territories or the amount of electrolyte contained in the leachate may vary by the amount of rainfall.

To cope with these problems, for example, JP-B-62-44032 (the term "JP-B" as used herein means an "examined Japanese patent publication") discloses a calking compound composition comprising a natural rubber and a swellable urethane material, as a material capable of exhibiting a stable magnification of swelling irrespective of the water quality. Further, JP-A-62-256884 (the term "JP-A" as used herein means an "unexamined published Japanese patent application") discloses a water-swellable water stopping material comprising an elastomer, a hydrophilic urethane polymer, one or both of a liquid rubber and polyethylene oxide, and a highly water-absorptive resin.

However, the urethane material has poor compatibility with the elastomer and therefore, the calking compound composition or water-swellable water stopping material undergoes dissolving out of the urethane material from the rubber matrix with a passing of a long time and is reduced in the water stopping capability. Further, the production conditions of a calking compound composition or water-swellable water stopping material are complicated and the production cost thereof is high.

These problems are intended to overcome by a method of using a water-absorptive resin and a water-swellable urethane in combination and, for example, JP-A-8-157803 discloses a water-swellable composite sealant comprising a water-swellable sealant containing a highly water-absorptive resin as a main component and a water-swellable sealant reduced in the dissolution and containing a water-swellable urethane as a main component.

On the other hand, JP-A-9-3250 discloses an aqueous solvent-swellable rubber composition comprising an N-vinylcarboxylic acid amide-base polymer and an elastomer, which exhibits good water absorbency and good solvent absorbency to pure water, an aqueous solution containing an acid, alkali or salt, a hydrous organic solvent or a hydrophilic organic solvent.

However, in order to maintain the stable swelling capability of the water-swellable composite sealant disclosed in JP-A-8-157803 against the change of the water quality, the content of the highly water-absorptive resin constituting the water-swellable sealant must be reduced as compared with the content of the water-swellable urethane. Accordingly, this is not a satisfactory method for compensating the defects of the water-swellable urethane.

Further, the aqueous solvent-swellable rubber composition disclosed in JP-A-9-3250 must use an N-vinylcarboxylic acid amide-base polymer as a water-absorptive resin in a large amount so as to obtain a swelling magnification of two times or more and accordingly, the condition in use as a water stopping material is inevitably limited.

### SUMMARY OF THE INVENTION

The object of the present invention is to develop a water-swellable elastomer composition which can retain the stable magnification of swelling with an aqueous solution containing an electrolyte or ion such as acid, alkali and various

salts, sea water or cement water, and can be used as a leak-preventive material for a long period of time.

For attaining the above-described object, the water-swellable elastomer composition of the present invention comprises (A) an N-vinylcarboxylic acid amide-base crosslinked resin, (B) a water-swellable urethane obtained by the reaction of a hydrophilic polyol with a polyisocyanate, and (C) an elastomer.

The water-swellable elastomer is characterized in that the N-vinylcarboxylic acid amide-base crosslinked resin (A) is an N-vinylacetamide-base crosslinked resin.

The water-swellable elastomer composition is characterized in that the N-vinyl-carboxylic acid amide-base crosslinked resin (A) is blended in a proportion of from 1 to 100 parts by weight per 100 parts by weight of the elastomer (C).

The water-swellable elastomer composition is characterized in that the water-swellable urethane (B) is blended in a proportion of from 1 to 100 parts by weight per 100 parts by weight of the elastomer (C).

The water-swellable elastomer composition is characterized in that the ratio of the magnification of swelling with a 5% aqueous calcium chloride solution to the magnification of swelling with deionized water, is 70% or more.

The water-swellable elastomer composition is characterized in that the weight variation rate is 5% or less.

DESCRIPTION OF THE PREFERRED EMBODIMENTS

The present invention is described in detail below.

The N-vinylcarboxylic acid amide-base crosslinked resin (A) is specifically a liquid-absorptive resin obtained by radical polymerizing an N-vinylcarboxlic acid amide represented by Chem. 1 (wherein $R_1$ and $R_2$ each independently represents hydrogen or a methyl group or $R_1$ and $R_2$ are combined to form an alkylene group having from 3 or 4 carbon atoms) and, if desired, other monomer copolymerizable with the N-vinylcarboxylic acid amide in the presence of a crosslinking monomer.

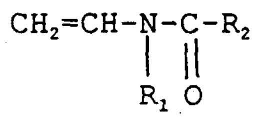

The N-vinyl carboxylic acid amide-base crosslinked resin (A) can absorb an aqueous solution over a wide range, for example, a high-concentration salt solution such as sea water, an acidic water, an alkaline water and an aqueous alcohol solution, has excellent heat resistance and light fastness, and is free of decomposition by microorganisms.

Specific examples of the N-vinylcarboxylic acid amide include N-vinylacetamide, N-methyl-N-vinylacetamide, N-vinylformamide, N-methyl-N-vinylformamide and N-vinylpyrrolidone. Among these, N-vinylacetamide is preferred in view of the water absorbing/solvent absorbing capability.

Specific examples of the monomer copolymerizable with the N-vinylcarboxylic acid amide include a (meth)acrylic acid and a sodium, potassium, lithium, ammonium or like salt thereof; an alkyl ester thereof such as methyl ester, ethyl ester, propyl ester and butyl ester; a hydroxyalkyl ester thereof such as hydroxyethyl ester and hydroxypropyl ester; an alkyl ester thereof substituted by a lower alkyl amino group, such as dimethyl ester and dimethylaminoethyl ester; a lower alkyl ester thereof substituted by a quaternary ammonium group, such as trimethylammonioethyl ester haloid and trimethylammoniopropyl ester haloid; an alkyl ester thereof substituted by an alkylsulfonic acid or a salt thereof, such as sulfomethyl ester, sulfoethyl ester, linear or branched sulfopropyl ester, sulfobutyl ester and a sodium, potassium, lithium, ammonium or like salt thereof; a (meth)acrylamide; an alkyl amide thereof substituted by an alkyl group, such as methylamide, ethylamide, linear or branched propylamide and butylamide; an alkyl amide thereof substituted by an alkylamino group, such as dimethylaminomethylamide, dimethylaminoethylamide and dimethylaminopropylamide; an alkylamide thereof substituted by a quaternary ammonium group such as trimethylammonioethylamide haloid and trimethylammoniopropylamide haloid; an alkylamide thereof substituted by an alkylsulfonic acid or a salt thereof, such as sulfomethylamide, sulfoethylamide, linear or branched sulfopropylamide, sulfobutylamide and a sodium, potassium, lithium, ammonium or like salt thereof; a (meth)acrylonitrile; a vinyl ether such as methyl vinyl ether and ethyl vinyl ether; a vinyl ketone such as methyl vinyl ketone and ethyl vinyl ketone; a lower vinyl carboxylate such as vinyl acetate and vinyl propionate; an allylsulfonic acid and a sodium, potassium, lithium, ammonium or like salt thereof; a maleic acid and a sodium, potassium, lithium, ammonium or like salt thereof; a fumaric acid and a sodium, potassium, lithium, ammonium or like salt thereof; an itaconic acid and a sodium, potassium, lithium, ammonium or like salt thereof; and a vinylsulfonic acid and a sodium, potassium, lithium, ammonium or like salt thereof. In addition, a monomer other than the above-described monomers can also be copolymerized with the N-vinylcarboxylic acid amide.

Among these, from the standpoint that an N-vinylcarboxylic acid amide-base crosslinked resin capable of exhibiting a high liquid absorbency to an aqueous solution having a high salt concentration can be obtained, the cost is relatively low and the availability is good, hydroxyalkyl (meth)acrylate, (meth)acrylic acid (salt), 2-acrylamide-2-methylpropanesulfonic acid (salt), vinylsulfonic acid (salt), maleic acid (salt) and itaconic acid (salt) are preferred. Two or more of the above-described monomers can be used simultaneously.

The weight ratio of the N-vinylcarboxylic acid amide to the monomer copolymerizable with the N-vinylcarboxylic acid amide is preferably from 100:0 to 50:50. If the ratio of the monomer exceeds 50%, the liquid absorbency, the heat resistance and the light fastness to an aqueous solution having a high salt concentration are disadvantageously reduced.

The N-vinylcarboxylic acid amide-base crosslinked resin (A) is necessary to be crosslinked (insolubilized) by any method. One example of the crosslinking method comprises adding a compound having two or more polymerizable unsaturated groups within one molecule and/or a compound capable of reacting with a functional group in the other monomer copolymerizable with an N-vinylcarboxylic acid amide to form a chemical bond (hereinafter, these compounds are collectively referred to as a "crosslinking agent"), to a single kind of monomer or a mixture of two or more kinds of monomers, and then effecting the crosslinking together with the polymerization of the monomer.

In this crosslinking, any known crosslinking agent having two or more polymerizable unsaturated groups within one molecule can be used and examples thereof include polyallyl ethers derived from a compound having two or more hydroxyl groups within one molecule, such as tetraallyloxyethane, pentaerythritol tetraallyl ether, pentaerythritol triallyl ether, pentaerythritol diallyl ether, trimethylolpropane triallyl ether, trimethylolpropane diallyl ether, ethylene glycol diallyl ether, diethylene glycol diallyl ether, triethylene glycol diallyl ether, diallyl ether, monosaccharide, disaccharide, polysaccharide and cellulose; polyallyl esters derived from a compound having two or more carboxyl groups within one molecule, such as tetraallyl pyromellitate, triallyl trimellitate, triallyl citrate, diallyl oxalate, diallyl succinate, diallyl adipate, diallyl maleate, diallyl fumarate, diallyl terephthalate, diallyl isophthalate and diallyl phthalate; compounds having two or more allyl groups within one molecule such as diallylamine, triallyl isocyanate and triallyl cyanate; compounds having two or more vinyl ester structures within one molecule such as divinyl oxalate, divinyl malonate, divinyl succinate, divinyl glutarate, divinyl adipate, divinyl pimelate, divinyl maleate, divinyl fumarate, trivinyl citrate, trivinyl trimellitate and tetravinyl pyromellitate; bis (N-vinylcarboxylic acid amide) compounds such as N,N'-butylenebis(N-vinylacetamide) and N,N'-diacetyl-N,N'-divinyl-1,3-bisaminomethylcyclohexane; compounds having a plurality of acrylamide structures or (meth)acryl groups, such as N,N'-methylenebisacrylamide, ethylene glycol di(meth)acrylate, diethylene glycol di(meth)acrylate, triethylene glycol di(meth)acrylate, polyethylene glycol di(meth)acrylate, trimethylolpropane tri(meth)acrylate and pentaerythritol tri(meth)acrylate; and compounds having two or more unsaturated groups within one molecule, such as divinyl benzene, divinyl ether and allyl (meth)acrylate. These crosslinking agents may be used individually or in combination of two or more thereof.

Other than the above-described crosslinking method, various crosslinking methods can be used, such as a method of previously producing a crosslinked product precursor polymer which is not crosslinked, and reacting the crosslinked product precursor polymer with the functional group of a polymer to form a chemical bond, or a method of effecting the crosslinking by radiation or peroxide.

Examples of the crosslinking agent capable of reacting with a functional group of a monomer or polymer, such as a hydroxyl group or a carboxyl group, to form a chemical bond include, according to the functional group in the monomer or polymer, polyglycidyl ether, polyisocyanate, polyamine, polyol and polycarboxylic acid.

The amount of the crosslinking agent used is usually, in terms of the weight ratio of monomer:crosslinking agent, from 90:10 to 99.999:0.001, based on the entire monomer.

In blending the N-vinylcarboxylic acid-amide-base crosslinked resin (A) produced as above to an elastomer (C), the elastomer (C) used generally has a particle size of 500 μm or less, preferably 100 μm or less, more preferably 50 μm or less. The particle shape is not particularly limited and either a spherical form or an amorphous form may be used.

The water-swellable urethane (B) for use in the present invention is obtained by the reaction of a hydrophilic polyol with a polyisocyanate.

The hydrophilic polyol used here is a polyol having a large number of ether groups in the molecular chain. Specific examples thereof include polyether polyols obtained by polymerizing ethylene oxide and/or propylene oxide disclosed in JP-B-53-38750, polyols obtained by copolymerizing ethylene oxide or propylene oxide with (poly)glycerin, modified polyols obtained by introducing an acryl group or epoxy group into the above-described polyols, sugar-origin polyols obtained by adding ethylene oxide or propylene oxide to cyclic sugar, chained sugar or oligosaccharide, and modified sugar-origin polyols obtained by introducing an acryl group or epoxy group into the above-described polyols. Two or more of these polyols can be used simultaneously.

The polyisocyanate is an isocyanate compound having two or more isocyanate groups within one molecule. Specific examples thereof include tolylene diisocyanate, 1,4-butanediisocyanate, cyclohexane diisocyanate, dicyclohexyl isocyanate, 4,4'-diphenylmethane isocyanate, naphthalene-1,5-diisocyanate, xylylene diisocyanate, hexamethylene diisocyanate, isophorone diisocyanate, tolylene diisocyanate and block isocyanates obtained by protecting the isocyanate group of these compounds with a protective group. Two or more of these polyisocyanates can be used simultaneously.

The water-swellable urethane (B) and the elastomer (C) are mixed, for example, by a method such that a hydrophilic polyol and a polyisocyanate are previously reacted to produce the water-swellable urethane (B) and then powder of the water-swellable urethane (B) is mixed with the elastomer (C), or by a method such that a hydrophilic polyol and a polyisocyanate are added to and mixed with the elastomer (C) and at the same time, the water-swellable urethane (B) is generated in the elastomer (C).

Specific examples of the elastomer (C) for use in the present invention include natural rubber and various synthetic rubber such as styrene-butadiene rubber, acrylonitrile-butadiene rubber, isoprene rubber, butadiene rubber, butyl rubber, chloroprene rubber, ethylene-propylene rubber, urethane rubber, silicon rubber, chlorosulfonated polyethylene rubber, chlorinated polyethylene rubber, acrylic rubber, epichlorohydrin rubber and fluororubber. Two or more of these rubbers can be used simultaneously, if desired.

The amount of the N-vinylcarboxylic acid amide-base crosslinked resin (A) blended is from 1 to 100 parts by weight, preferably from 5 to 80 parts by weight per 100 parts by weight of the elastomer (C). If the amount of the N-vinylcarboxylic acid amide-base crosslinked resin (A) blended is less than the above-described range, a water swellable elastomer composition having high durability can be difficultly obtained, whereas if the amount of the N-vinylcarboxylic acid amide-base crosslinked resin (A) blended exceeds the above-described range, the water-swellable elastomer composition obtained disadvantageously has a large weight variation rate, as described later specifically.

The amount of the water-swellable urethane (B) blended is from 1 to 100 parts by weight, preferably from 5 to 80 parts by weight, per 100 parts by weight of the elastomer (C). If the amount of the water-swellable urethane (B) blended is less than the above-described range, the water-swellable elastomer composition obtained can difficultly attain the increase of the swelling magnification and the effect of the combination use is not provided, whereas if the amount of the water-swellable urethane (B) blended exceeds the above-described range, a water-swellable elastomer composition having high durability can be hardly obtained.

The water-swellable elastomer composition of the present invention can contain additives, if desired, within the range of not impairing the object. Examples of the additive include a vulcanizing agent, a vulcanization accelerator, a vulcanization aid, a softener, a plasticizer, a reinforcing agent, a coloring agent, an ultraviolet absorbent, an antioxidant, a lubricant, an age resistor and an inorganic filler such as clay, calcium carbonate, magnesium oxide, zinc oxide, white carbon, carbon black, talc and bentonite. Further, a nonionic surfactant, a cationic surfactant, an anionic surfactant or a commercially available compatibilizer used for the elastomer (C) may also be added. Two or more of the additives can be used simultaneously. In the case of using the additive, the additive can be mixed simultaneously with the N-vinyl carboxylic acid amide-base crosslinked resin (A), the water-swellable urethane (B) and the elastomer (C) constituting the present invention, or these may be mixed in sequence.

The water-swellable elastomer composition of the present invention may be formed by any molding method such as extrusion continuous molding, press die molding or vulcanizer molding.

The water-swellable elastomer composition of the present invention stably exhibits the swelling capability for a long period of time, not only to normal water but also to an aqueous solution containing an electrolyte or ion such as acid, alkali and various salts, sea water or cement water. Accordingly, in the civil engineering works or building works, the water-swellable elastomer composition of the present invention can be filled into the joint surface in the sealed segment of a submarine tunnel or a large diameter sewer, the joint part of a Hume pipe or a prefabricated culvert, or the construction joint of a concrete building and used as a water stopping material. In addition, the water-swellable elastomer composition of the present invention can be used as a leak-shielding sheet on the roof of a concrete building, a raintight sealant of a window frame or a door, a leak-preventive sealant of an undersea caisson or a sheet pile, or a sealant for jointing part of successive concrete pours of a concrete building.

## EXAMPLES

The present invention is described in greater detail below by referring to the Examples, however, the present invention should not be construed as being limited to these Examples.

The ratio of the water-swellable elastomer composition of the present invention blended, the swelling magnification with artificial sea water, the retention and the weight variation rate in Examples 1 to 5 and Comparative Examples 1 to 3 are shown in Table 1.

| Ratio of Water-Swellable Elastomer Composition blended (parts by weight) | Example 1 | Example 2 | Example 3 | Example 4 | Example 5 | Comparative Example 1 | Comparative Example 2 | Comparative Example 3 |
|---|---|---|---|---|---|---|---|---|
| Water-absorptive resin powder | a | b | c | a | a | d | | a |
| | 40 | 30 | 10 | 70 | 60 | 40 | - | 40 |
| Water-swellable urethane | 40 | 40 | 60 | 40 | 10 | 40 | 80 | - |
| Chloroprene rubber | 100 | 100 | 100 | 100 | 100 | 100 | 100 | 100 |
| Magnesium oxide | 5 | 5 | 5 | 5 | 5 | 5 | 5 | 5 |
| Zinc oxide | 5 | 5 | 5 | 5 | 5 | 5 | 5 | 5 |
| Vulcanization accelerator | 2 | 2 | 2 | 2 | 2 | 2 | 2 | 2 |
| Lubricant | 1 | 1 | 1 | 1 | 1 | 1 | 1 | 1 |
| Age resistor | 2 | 2 | 2 | 2 | 2 | 2 | 2 | 2 |
| Calcium carbonate | 15 | 15 | 15 | 15 | 15 | 15 | 15 | 15 |
| Softener | 20 | 20 | 20 | 20 | 20 | 20 | 20 | 20 |
| Swelling magnification with artificial sea water (times) | 2.5 | 3.0 | 2.8 | 2.8 | 2.5 | 2.0 | 2.8 | 1.3 |
| Retention (%) | 90 | 73 | 88 | 92 | 83 | 66 | 88 | 90 |
| Weight variation rate (%) | 2 | 4 | 4 | 2 | 2 | 8 | 7 | 2 |

The water-absorptive resin powders a, b and c are powders a, b and c of the N-vinylcarboxylic acid amide-base cross-linked resin (A). The production process of each powder is described below.

(Production process of powder a of N-vinylcarboxylic acid amide-base crosslinked resin (A))

In a 1 L-volume three-necked separable flask equipped with a nitrogen introduction tube, a thermometer and an exhaust pipe placed in a bath kept at 30°C, 250 g of N-vinylacetamide and 1.6 g of pentaerythritol allyl ether were dissolved in 740 g of deionized water. Nitrogen was introduced into the system at a rate of 1.0 L/min for 1 hour to effect deaeration. Thereafter, to 10 mL of the deaerated water, 600 mg of dissolved 2,2'-azobis(2-amidinopropane)dihydrochloride was added and the solution was allowed to stand in an adiabatic system for 12 hours. The gel obtained was cut in a mincer, vacuum dried at 50°C for 12 hours and mechanically ground to obtain powder a of the N-vinylcarboxylic acid amide-base crosslinked resin (A) having a particle size of 50 μm or less and an average particle size of 20 μm.

(Production process of powder b of N-vinylcarboxylic acid amide-base crosslinked resin (A))

In a 1 L-volume three-necked separable flask equipped with a nitrogen introduction tube, a thermometer and an exhaust pipe placed in a bath kept at 30°C, 235 g of N-vinylacetamide, 53 g of a 28.5% aqueous sodium acrylate solution, 500 mg of tetraallyloxyethane and 200 mg of N,N-methylenebisacrylamide were dissolved in 702 g of deionized water. Nitrogen was introduced into the system at a rate of 1.0 L/min for 1 hour to effect deaeration. Thereafter, to 10 mL of the deaerated water, 600 mg of dissolved 2,2'-azobis(2-amidinopropane)dihydrochloride was added and the solution was allowed to stand in an adiabatic system for 12 hours. The gel obtained was cut in a mincer, vacuum dried at 50°C for 12 hours and mechanically ground to obtain powder b of the N-vinylcarboxylic acid amide-base crosslinked resin (A) having a particle size of 50 μm or less and an average particle size of 30 μm.

(Production process of powder c of N-vinylcarboxylic acid amide-base crosslinked resin (A))

In a 1 L-volume three-necked separable flask equipped with a nitrogen introduction tube, a thermometer and an exhaust pipe placed in a bath kept at 30°C, 200 g of N-vinylacetamide, 50 g of 2-hydroxyethyl acrylate and 400 mg of tetraallyloxyethane were dissolved in 740 g of deionized water. Nitrogen was introduced into the system at a rate of 1.0 L/min for 1 hour to effect deaeration. Thereafter, to 10 mL of the deaerated water, 500 mg of dissolved 2,2'-azobis(2-amidinopropane)dihydrochloride was added and the solution was allowed to stand in an adiabatic system for 12 hours. The gel obtained was cut in a mincer, vacuum dried at 50°C for 12 hours and mechanically ground to obtain powder c of the N-vinylcarboxylic acid amide-base crosslinked resin (A) having a particle size of 50 μm or less and an average particle size of 30 μm.

The water-absorptive resin powder d used was Aqualic CS-6S (produced by Nippon Shokubai KK) and the water-swellable urethane (B) used was Pandex T-654P (produced by Dainippon Ink & Chemicals, Inc.).

Respective components blended at a ratio shown in Examples 1 to 5 and Comparative Examples 1 to 3 of Table 1 were kneaded in an internal kneading machine and then vulcanized by a vulcanizing press to obtain a vulcanized sheet of water-swellable elastomer composition having a thickness of 3 mm.

Test pieces were cut out from the vulcanized sheet obtained above and the test pieces were subjected to determination of the swelling magnification with artificial sea water, the retention and the weight variation rate.

(Measuring method of swelling magnification with artificial sea water)

Each test piece (20 mm × 20 mm × 3 mm) was determined on the weight (hereinafter referred to as a dry weight before dipping). Then, the test pieces were dipped in artificial sea water at 25°C for 30 days, taken out therefrom, and wiped lightly with filter paper to remove free water. Thereafter, each test piece was determined on the weight after the swelling (hereinafter referred to as a weight after dipping). The swelling magnification was calculated using the dry weight before dipping and the weight after dipping according to the following formula (1):

$$\text{Swelling magnification (times)} = \text{weight after dipping/dry weight before dipping} \qquad (1)$$

(Measurement method of retention)

A plurality of test pieces (20 mm × 20 mm × 3 mm) each was determined on the dry weight before dipping. Then, the test pieces were dipped in deionized water or a 5% aqueous calcium chloride solution at 25°C for 30 days, taken out therefrom, and wiped lightly with filter paper to remove free water. Thereafter, each test piece was determined on the weight after the dipping. The retention was calculated using respective swelling magnifications obtained from the dry weight before dipping and the weight after dipping, according to the following formula (2):

$$\text{Retention (\%)} = \text{(swelling magnification with 5\% aqueous calcium chloride solution/swelling magnification with deionized water)} \times 100 \quad (2)$$

(Calculation method of weight variation rate)

Each test piece (20 mm × 20 mm × 3 mm) was determined on the dry weight before dipping. Then, the test pieces were dipped in cement water at 25°C for 100 days, taken out therefrom, and dried. Thereafter, each test piece was determined on the weight (dry weight after dipping). The weight variation rate was calculated from the dry weight before dipping and the dry weight after dipping according to the formula (3):

$$\text{Dry variation rate (\%)} = \{\text{(dry weight before dipping - dry weight after dipping)/dry weight before dipping}\} \times 100 \quad (3)$$

The retention of the water-swellable elastomer composition of the present invention is preferably 70% or more. If the retention is less than 70%, a sufficiently stable swelling capability cannot be obtained with an aqueous solution having various water qualities, such as cement water and sea water. The retention is more preferably 75% or more.

The weight variation rate of the water-swellable elastomer composition of the present invention is preferably 5% or less. When the weight variation rate is 5% or less, the composition can be used for a long period of time with small weight variation rate and exhibits high durability. If the weight variation rate exceeds 5%, the water-swellable elastomer composition is gradually reduced in the swelling magnification during the long-term use, in particular, when the composition is used in contact with concrete, stable water stopping capability can be hardly attained.

The water-swellable elastomer composition of the present invention comprises (A) an N-vinylcarboxylic acid amide-base crosslinked resin, (B) a water-swellable urethane obtained by the reaction of a hydrophilic polyol with a polyisocyanate, and (C) an elastomer, whereby the composition can exhibit stable and high swelling capability not only to pure water but also to an aqueous solution containing an electrolyte or ion such as acid, alkali and various salts, sea water or cement water, and even when it is used for a long period of time as a leak-preventive material on the excavation of a submarine tunnel, a large diameter sewer or hot spring, or as a sealant of an undersea caisson or a sealant for jointing part of successive concrete pours, the composition can exhibit high durability without undergoing reduction in the water stopping capability.

## Claims

1. A water-swellable elastomer composition comprising (A) an N-vinylcarboxylic acid amide-base crosslinked resin, (B) a water-swellable urethane obtained by the reaction of a hydrophilic polyol with a polyisocyanate, and (C) an elastomer.

2. The water-swellable elastomer composition as claimed in claim 1, wherein said N-vinylcarboxylic acid amide-base crosslinked resin (A) is an N-vinylacetamide-base crosslinked resin.

3. The water-swellable elastomer composition as claimed in claim 1 or 2, wherein said N-vinyl-carboxylic acid amide-base crosslinked resin (A) is blended in a proportion of from 1 to 100 parts by weight per 100 parts by weight of said elastomer (C).

4. The water-swellable elastomer composition as claimed in any one of claims 1 to 3, wherein said water-swellable urethane (B) is blended in a proportion of from 1 to 100 parts by weight per 100 parts by weight of said elastomer (C).

5. The water-swellable elastomer composition as claimed in any one of claims 1 to 4, wherein the ratio of the magnification of swelling with a 5% aqueous calcium chloride solution to the magnification of swelling with deionized water is 70% or more.

6. The water-swellable elastomer composition as claimed in any one of claims 1 to 5, wherein the weight variation rate is 5% or less.

European Patent Office

# EUROPEAN SEARCH REPORT

Application Number
EP 98102540.6

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 6) |
|---|---|---|---|
| D,A | Patent Abstracts of Japan, Vol. 1997, No. 5(028), 30 May 1997; & JP 09-003250 A (SHOWA DENKO KK.) 07 January 1997, abstract. -- | 1-6 | C 09 K 3/10<br>C 08 L 39/00<br>C 08 L 75/04<br>C 08 L 101/14 |
| D,A | Patent Abstracts of Japan, Vol. 1996, No. 10(021), 31 October 1996; & JP 08-157803 A (FUTABE GOMME KOGYO KK.) 18 June 1996, abstract. ---- | 1-6 | |

TECHNICAL FIELDS SEARCHED (Int. Cl. 6)

C 08 L
C 09 K

The present search report has been drawn up for all claims

| Place of search | Date of completion of the search | Examiner |
|---|---|---|
| VIENNA | 11-12-1998 | TENGLER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

ANNEX TO THE EUROPEAN SEARCH REPORT
ON EUROPEAN PATENT APPLICATION NO. EP 98102540.6

This annex lists the patent family members relating to the patent documents cited in the above-mentioned search report.
The members are as contained in the EPIDOS INPADOC file on 16.12.1998.
The European Patent Office is in no way liable for these particulars which are merely given for the purpose of information.

| Patent document cited in search report | Publication date | Patent family member(s) | Publication date |
|---|---|---|---|
| JP A2 9003250 | 07-01-97 | none | |
| JP A2 8157803 | 18-06-96 | none | |

For more details about this annex see Official Journal of the European Patent Office, No. 12/82.